Europäisches Patentamt

European Patent Office

Office européen des brevets

(11) Publication number: **0 151 635**
**B1**

# EUROPEAN PATENT SPECIFICATION

(45) Date of publication of patent specification: 02.03.88

(21) Application number: 84903201.6

(22) Date of filing: 13.08.84

(86) International application number:
PCT/NL84/00026

(87) International publication number:
WO 85/00787 28.02.85 Gazette 85/05

(51) Int. Cl.⁴: **B 60 P 1/64,** B 65 G 63/02,
B 65 G 67/02

(54) APPARATUS FOR LOADING AND UNLOADING AN INTERCHANGEABLE CONTAINER ONTO AND FROM A VEHICLE.

(30) Priority: 12.08.83 NL 8302848

(43) Date of publication of application:
21.08.85 Bulletin 85/34

(45) Publication of the grant of the patent:
02.03.88 Bulletin 88/09

(84) Designated Contracting States:
AT BE CH DE FR GB LI LU NL SE

(56) References cited:
EP-A-0 087 846
DE-A-2 248 350
DE-A-2 758 693
US-A-4 153 169

(73) Proprietor: N.C.H. HYDRAULISCHE SYSTEMEN B.V.
Toldijk 21
NL-7901 TA Hoogeveen (NL)

(72) Inventor: NIJENHUIS, Derk, Sr.
Toldijk 21
NL-7901 TA Hoogeveen (NL)

(74) Representative: van der Beek, George Frans et al
Nederlandsch Octrooibureau Johan de Wittlaan 15 P.O. Box 29720
NL-2502 LS 's-Gravenhage (NL)

Courier Press, Leamington Spa, England.

## Description

The invention relates to an apparatus as specified in the introductory part of claim 1 as enclosed.

Such an apparatus is known from SE—A—416,923. Therein the carriage has a hook on an upstanding arm swingable about a considerable angle to pick up a container to be lifted, and the two chains or cables are united to one single cable or chain, bridging the carriage transversely. The carriage is provided on a slidable part forming the supporting surface for a container on the vehicle or other support, and this slidable part is provided on a tipping bridge and is movable thereon only between the horizontal pivoting axis and the opposite end of the tipping bridge. When the carriage moves forward on the supporting surface, this transverse part of the chain or cable is prevented from moving forward further with the carriage because it meets one or more stationary hook members in the supporting surface, so that, on further forward movement of the carriage, the chain or cable can move a container, to which its ends are hooked, onto the supporting surface with twice the speed of the carriage.

This requires separate driving means for the carriage, which require much space in (below) the supporting surface. No hook means or the like on the carriage can reach a container to be picked up unless they can swing over a considerable angle with respect to the carriage.

The present invention aims at improving this while maintaining a multi-purpose apparatus, i.e. apparatus for taking up mutually different types of containers in the simplest possible manner.

To this end, an apparatus as specified in the introductory part of claim 1 is according to the invention characterized by the features of the characterizing part of the enclosed claim 1.

The tipping bridge requires driving means, usually hydraulic cylinders, both for tilting it up and down and, when applying the invention, to move it or part thereof slidably in longitudinal direction with the bridge tilted upwardly, so that this slidable part can reach the ground for approaching a container. Such driving means require much space immediately below the supporting surface, and in the horizontal position of the tipping bridge the driving means for moving it up and down should find space between, alongside or below the driving means for said sliding movement.

By applying the invention the carriage can be moved by said chains or cables, already present for moving containers and extending along the sides of the tipping bridge.

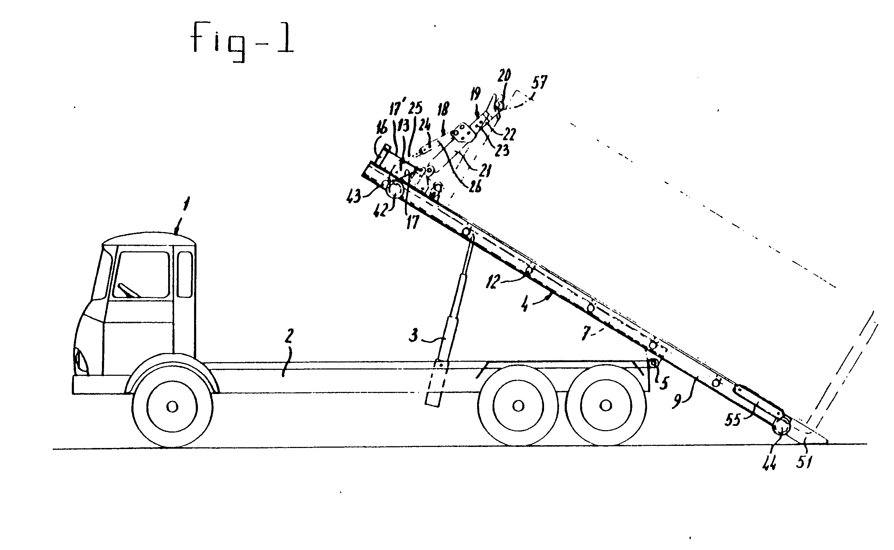

For the different types of containers to be taken up, it is remarked that containers exist which having gripping means consisting of hooks or eyes projecting sideways from their horizontal bearers (Dutch Patent Specification No. 128,236), a central hook or eye under the container (GB—A—1,234,147), a hook or eye at the bottom of the front side of the container (GB—A—1,385,997, Figures 8 and 9), a hook or eye at the top of the front side of the container (GB—A—2,033,346), and there are also so-called sea containers having eyes in corner pieces at top and bottom (so-called corner castings, DE—A—2,248,350, Figures 1 to 7).

Preferably, the slidable tipping bridge or slidable part thereof carries two cable or chain winches near the end opposite said pivoting axis, one to each side of the central vertical plane perpendicular to said pivoting axis, each one for driving one of said chains or cables.

The apparatus may also be provided with means for picking up so-called sea containers having upright pick-up slots in corner pieces (so-called corner castings).

If this is desirable because otherwise they may impede the use of other gripping means, for example because they may press against the container, or because otherwise they project needlessly far sideways, the gripping means on the carriage, such as hooks at a low level or hooks at the top end of an upstanding arm thereon, and/or means for picking up sea containers, when they are not in use, may be mounted for easy removal or folding and thus be removed or folded away when this is desirable for one of the reasons given.

The invention will now be explained more fully with the aid of the accompanying drawings, in which:

Figure 1 is a more or less schematic side view of an apparatus according to the invention in an intermediate state in the picking up or setting down of a container;

Figure 2 is a top plan view of a tipping bridge as part of the apparatus shown in Figure 1;

Figure 3 is a partial side view of this tipping bridge in the horizontal position with a container partly pushed onto it;

Figure 4 is a similar side view with different gripping means in operation than in Figure 3;

Figure 5 shows a detail of a different form of construction of the rear end of a tipping bridge with an associated container;

Figure 6 is a partial side view of a tipping bridge with gripping means in operation for a sea container; and

Figure 7 is a rear view of the tipping bridge shown in Figure 6.

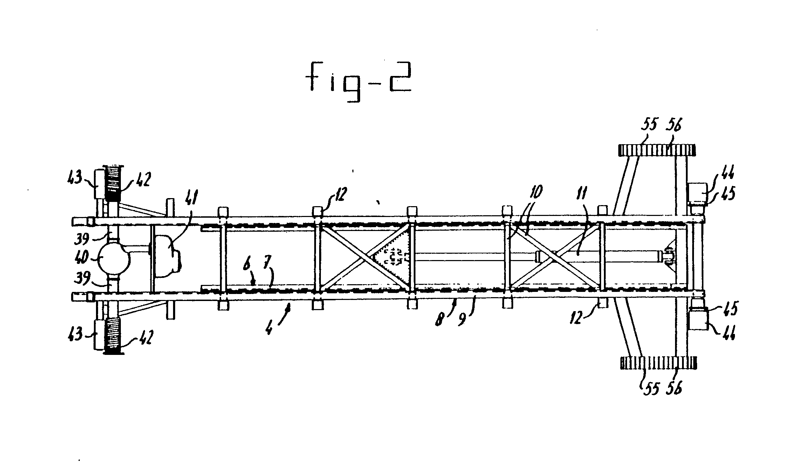

A vehicle 1 carries, pivoting in a fixed frame 2, a hydraulic telescopic multicylinder 3 adapted to tip a tipping bridge 4 up and down about a pivot joint 5 at the rear end of the vehicle 1. The tipping bridge comprises a frame 6 pivotally connected to the cylinder 3 and the pivot joint 5 and consisting of two channel sections 7 with a cross connection (not shown), and a carrier frame 8 which is adapted to move in the longitudinal direction relative thereto and is guided thereby, and which consists of channel sections 9 and cross connections. As can be seen in FIGURES 2 and 7, the channel sections 7 lie with their open side inwards, and the channel sections 9 lie with their open side outwards and with their web along the outside of the web of the sections 7. The guidance for the movement of the carrier frame 8 relative to and through the frame 6 can be provided in the usual manner by rollers (not shown). A horizontal hydraulic cylinder 11 connects the two frames 6 and 8, in such a manner that the frame 8 can be pushed by it over and along the frame 6, from a position in which the carrier frame 8 does not project or scarcely projects behind the vehicle (Figure 2) to a position in which it projects behind the vehicle (Figure 1).

The sections 9 are provided with carrier rollers 12 projecting outwards therefrom for the purpose of carrying and guiding beams lying thereunder inside the side edges of containers.

A carriage 13 is adapted to travel, with the aid of rollers 14 and 15, over the horizontal top flanges of the sections 9, and is secured at the front side against tilting by means of rollers 15' engaging under the flanges.

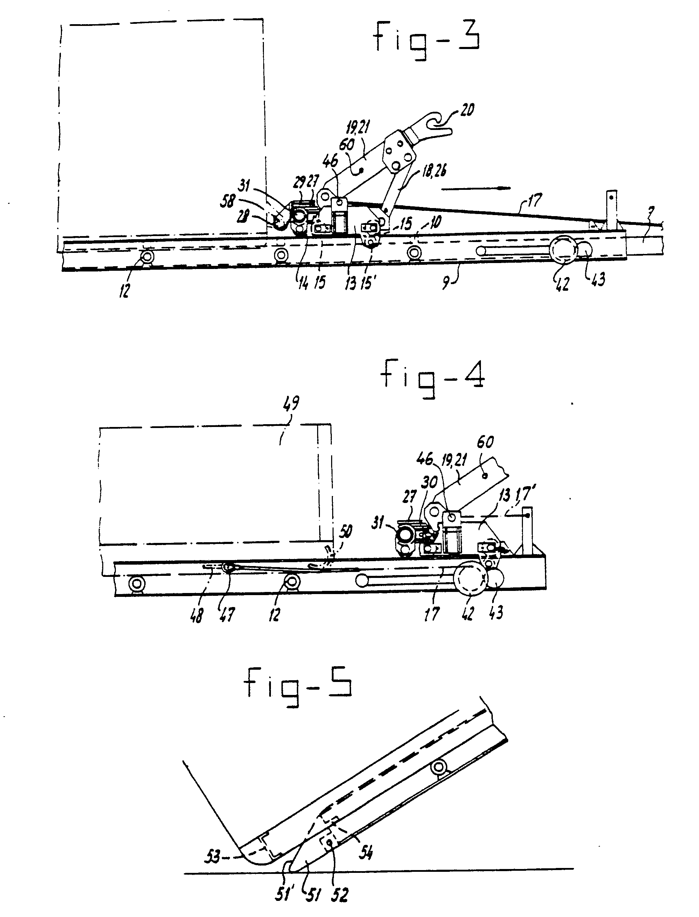

At the front end of the carrier frame 8 of the tipping bridge 4 are situated cable drums 42, which will be described later on and which are connected via cables 17 to the carriage 13 for the purpose of moving the latter in one direction, namely towards the cab of the vehicle. When the tipping bridge 4 is in an inclined position, as shown in Figure 4, the carriage will move through its own weight in the opposite direction. If it should be desired to move the carriage in the other direction while the tipping bridge lies horizontally, it is possible to install on the carriage a cable which serves to pull it back and which is guided over a roller near the other end of the tipping bridge and can be wound up by a drum 42 or a separate winch as the cable 17 is wound off, and vice versa.

Figures 1 and 3 show how the carriage has a pivoting strut 18 and an upwardly projecting pivoting hooked arm 19 ending in an open hook 20. The hooked arm 19 comprises a box girder 21, for example square in shape, in which a smaller box girder 22 is slidable and can be fastened in various positions by means of a pin engaged in coinciding holes 23. The strut 18 likewise consists of two parts 25 and 26 slidable one in the other and adapted to be fastened in different positions with the aid of a pin and coinciding holes 24. By adjusting the strut 18 to a desired length, the hooked arm 19 is thus brought into the desired angular position, and by varying the length of the arm 19 the hook 20 can be brought to the desired height for adaptation to the height of the grippable projection on the container which is to be picked up. If the hook 20 is not to be used because one of the other gripping means, which are still to be described, has to be used, and if the arm 19 inclined towards the container (in the position shown in Figure 1) may then cause an obstruction, the arm 19 can be brought into its shortest position and also optionally by the shortening of the strut 18 be swung back to the position shown in Figure 3.

The carriage 13 also carries a table 27 with a hook 28 (Figure 3), which by means of strong plate joints is secured to a horizontal plate 29 which lies on the table 27 and is joined thereto in such a manner as to be easily detachable, for example with the aid of bolts. The hook 28 can thus act on a grippable projection at the bottom of a container, as shown in Figure 3. When the hook 28 is not used, and, if use is made of one of the other gripping means on the apparatus, may be in the way, for example because it may then bear against the container, the hook can be removed easily by unbolting the said bolts, as shown in Figures 1 and 4.

Under the table 27 is disposed a horizontal cross tube 31, which by means of projecting parts is mounted on the carriage 13 in such a manner that it turns to some extent about a vertical pin 30 (Figure 4), the pin being mounted in the carriage 13 by means of a horizontal pivot extending in the longitudinal direction of the vehicle and adapted to turn to some extent in a bearing, so that the tube 31 can also turn to some extent about an axis in the longitudinal direction of the vehicle. When the pin 30 is removed, the tube 31 can be completely detached from the carriage 13 and removed.

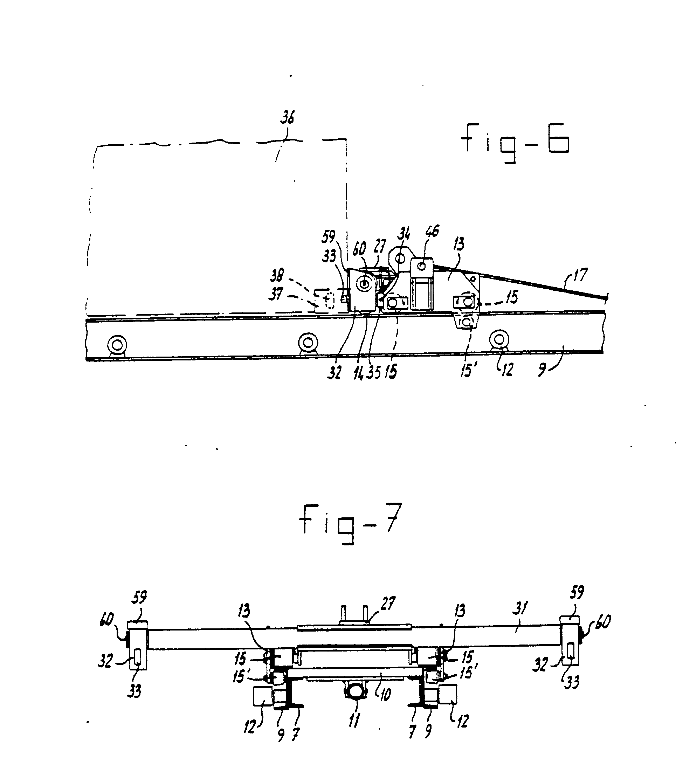

At each end of the tube 31 the latter carries a coupling member 32, in which a flat boss 33 is rotatable about a horizontal axis in the plane of Figure 6 and at right angles to the plane of Figure 7. This rotation can be effected by introducing the pin portion of a hand brace into an opening 34 in a part 35 projecting behind the coupling member 32 and fastened to the boss 33. The flat boss 33 can thus be turned from the vertical position shown in Figure 7 to a horizontal position, and vice versa. Each coupling member 32 can be carried by the tube 31 for pivoting about the longitudinal axis of the said tube, namely about pivots 60 thereon. Through the abovedescribed rotatability of the tube 31 on the carriage 13, about two axes at right angles to one another and through the pivotability of the coupling members 32, the bosses 33 can be adapted in position to mutual differences in angular position of the vehicle and the sea containers which are to be picked up. A container 36 of this kind is equipped as standard with so-called corner castings 37 at the corners, with upright slot-like openings 38 through which the flat bosses can pass. The bosses 33 can thus be brought into the vertical position and passed through the slots 38 directed towards the vehicle, and then turned 90° in the manner described in order to joint the carriage 13 firmly to the container 36, as is known per se and customary.

The slidable carrier frame 8 is provided at the front side with two cross axles 39 lying in line with one another and driven via a differential 40 by a drive means 41, for example a hydraulic motor fed with oil via a hose by a pump on the engine of the vehicle, as is known per se. Each of the cross axles 39 carries outside the frame a cable drum 42, against which a freely rotatable rubber roller 43 can press in order to secure a cable sufficiently on the drum 42 and to hold it in the helical groove in the drum. At the rear side of the frame 8 are disposed rollers 44 provided with a cable groove 45. In Figure 4 it is indicated how the cables 17 run from these drums towards the rear, and how each of them can be provided with a cable thimble 47 engaged on a hook 48 against the side of a bearer of a container, as known from Dutch Patent Specification No. 128,236. The container 49 (Figure 4) carries in this case, in known manner, at the bottom of the front side two guide shoes 50, each of which may be provided with a groove for guiding the cable 17.

If this construction is not used but the operation is carried out with the carriage 13, the cables 17 can be attached to the carriage at 46.

In Figure 5 it is indicated how the girders 9 of the carrier frame 8 may have at the rear end a detachable guide 51, which can be fastened in a simple manner by lockable pins passing through holes 52 in parts of the girders 9 and members 51 which extend along one another. If the girders 9 of the carrier frame 8 are displaced backwards onto the floor, when the tipping bridge is tipped, containers suitable for the purpose can slide by their front edges over the inclined top surfaces 51' of the guides 51 when they are lifted onto the vehicle, for example by means of the hook 20 on the carrier arm 19 or by means of the hook 28. The rollers 14 at the rear of the carriage 13 can be guided over the surfaces 52 in the rearmost positions of the carriage.

In the case of some containers a horizontal cross member 53 is provided at the rear of the bottom face, this member extending in the transverse direction over the girders 9 when the container is on the apparatus. For this purpose the guides 51 can be removed, and the bottom flange of the cross member 53 then slides into a slot 54 when the container is picked up, a projecting part of the guide 51 fitting into this slot 54, which is open to receive the flange when the guide 51 is removed.

The rearmost rollers 14 can be displaced over the part 51' of the path, from their guide path on the girder 9, the front rollers 15 and the bottom rollers 15' thereunder permitting some tipping of the carriage. When the guides 51 are removed, the carriage 13 can travel a shorter distance to the rear, but usually containers provided with a cross member 53 are containers which can be picked up in the manner described in connection with Figure 4.

In Figure 1 is shown a differently shaped end piece 51 of the girder 9, but this too must be able to be detached and removed when it is desired to use the system shown in Figure 4, because during the picking up and setting down of a container it must be possible for the cables 17 to run over the cable grooves 45 in the rollers 44 during a part of their travel and then to run from the cable grooves straight down to the guide shoes 50 and the hooks 48 on a container 49 standing at a lower level.

In Figures 1 and 2 it is shown how the carrier frame 8 can have at the rear end, on projecting girders, two guides 55 for guiding the side edges of wide containers, such as sea containers, and for providing stable support for the rear parts of their side edges when containers have been placed completely on the frame. These guides 55 may be formed by stationary slides surfaces, for example of PTFE, or, as illustrated, by endless bands, for example chains with metal cross strips 56, which are driven by friction by the container moving relative to the carrier frame 8.

With regard to the use of the apparatus, the following is additionally applicable:

If a container has to be picked up by means of the hook 20, the loading bridge 4 is placed in an inclined position (Figure 1) and its carrier frame 8 is pushed out by the cylinder 11 until its rear end is on or almost on the ground. The carriage 13 is moved towards this rear bottom end. Since the arm 20 of the hook is very greatly inclined relative to the container which is to be picked up, because of the inclined position of the tipping bridge, the hook 20 lies in a relatively low position above the ground, so that it can easily be brought under the grippable part 57 (Figure 1) on the container, while slight differences in horizontal position can be overcome by pushing the carrier frame 8 slightly further or less far out and by slightly moving the vehicle. The tipping bridge can now be brought into a slightly less inclined position by means of the cylinder 3, so that the hook 20 moves slightly upwards so as to engage the grippable member 57. The carriage 13 is now driven forward on the loading bridge 4, and the carrier frame 8 can be pushed forward at the same time, or optionally starting somewhat later. The carriage 13 can thus be moved, relative to the fixed frame 6 of the loading bridge, twice as quickly, in the absolute sense, as the frame 6, and the container is thus brought quickly and smoothly onto the tipping bridge, while the vehicle itself can move backwards in order to push the container over the ground as little as possible. The tipping bridge 4 can now be lowered to the horizontal position as soon as the container is for example positioned with its centre of gravity above the pivot point 5.

In the end position the carriage 13 may be secured on the tipping bridge 4 by means which are not shown. When operating with the system shown in Figure 4, that is to say without using the carriage 13, it is often expedient for the carriage to be secured against backward movement by means of one or two short cables 17' with thimbles at their ends, attached to points 46 on the carriage and to projections 16 on the front end of the frame 8.

When use is made of the hook 20, in a certain construction the tube 31, with parts at its ends for gripping the containers, may form an obstruction. In this case this tube may be made foldable, relative to the carriage 13, about a transverse axis parallel to the tube, instead of or in addition to the previously mentioned detachability.

When use is made of the hook 28 (Figure 3) situated in a lower position, the carrier arm 19 of the hook 20 can be swung back, as already stated.

The engagement of the hook 28 on a grippable member 58 on the container and the loading of the container onto the tipping bridge can be effected in the same way as has been described for the hook 20.

For the picking-up of a container by the hook 48 (Figure 4) on the side under the container, the tipping bridge 4 need not always be inclined, but, particularly for heavier containers, this is advisable because the container must otherwise tip forwards into an intermediate position and may thus apply a heavy downward shock to the construction. The cables 17 are guided over the cable grooves 45 at the rear and thence downwards, and are engaged by their thimbles 47 on the hooks 48 of the container. The winch drums 42 are now operated in order to wind the cable. The front side of the container then first moves vertically upwards until the shoes 50 on it rest on the rollers 44, and when the cable is further wound the container slides on the tipping bridge, for example to a position slightly further to the right than the position shown in Figure 4, while in the meantime the tipping bridge has been brought out of its inclined position (if it was inclined) into the horizontal position during the movement of the container.

For the picking-up of a sea container (Figures 6 and 7), the hook 28 can be removed, the carrier arm 19 with the hook 20 either removed or turned back to the position shown in Figures 3 and 4, and the member 31 with the gripping means 32 and 33 can be installed, if it had been removed. The carrier frame 8 is pushed out again downwards, with the tipping bridge 4 inclined, until its rear end reaches the ground. As the coupling members 32 are mounted for rotation on the end pivots 60 of the cross tube 31, they hang approximately vertically because of their low centre of gravity, so that the vertically disposed gripping bosses 33 can easily be introduced into the respective openings in the corner castings 37 of the container, while the coupling member 32 make contact with the container by means of stop surfaces 59 at their top end in order to guide it into the correct position. When the bosses 33 are turned into the horizontal position, as described, the sea container is locked to the carriage 13, while when the container is brought onto the tipping bridge 4 through the movement of the carriage 13 and of the carrier frame 8, the pivoting coupling members 32 follow differences of angle.

The cables 17 should also be able to act on the arm 19, 21, for example at a point 60 (Figures 3 and 4) and may then at choice run to the cable drums 42 either direct or via a deflector roller at the bottom of the arm.

**Claims -**

1. Apparatus having vertically and horizontally movable gripping means (20, 28, 33, 47) for gripping an interchangeable container (36, 39) and for bringing it from a lower level onto a supporting surface on a vehicle (1, 2) or other support, and for removing it therefrom, comprising a tipping bridge (4, 8) pivotable about a horizontal axis (5) near said end of said supporting surface where a container is to move onto and from said surface, said tipping bridge carrying said supporting surface, this bridge (4) or a part (18) thereof being slidable in a longitudinal direction of the bridge, said slidable part carrying a carriage (13) movable along said slidable part between positions near both ends thereof, said carriage (13) carrying means (20, 28, 33) adapted to grip a container to be lifted, said apparatus having two parallel chains or cables (17), one to each side of a longitudinal vertical plane of said supporting surface, said chains or cables (17) being extendable and movable in the longitudinal direction of said supporting surface, driving means (40, 41, 42) for moving said chains or cables (17), guide means (14) on said supporting surface near the end where a container is to move onto and from said surface to guide the chains or cables (17) past said end towards a container to be gripped, the chains or cables having hook means (47) or similar gripping means at their free ends for engaging hook means (48) or similar grippable means near the lower end to both sides of a container to be gripped, characterized in that the driving means (40, 41, 42) for moving said chains or cables (17) are adapted to move them with their hook means (47) to the end of the tipping bridge (4, 8) opposite said end where a container is to move onto and from said supporting surface independent of the movement of the carriage (13), that the slidable tipping bridge (4) or part thereof (18) is slidable with its end near the horizontal pivoting axis (5) movable to the ground and upwardly away therefrom in upwardly tilted position of the tipping bridge, and that said carriage (13) has hook means or similar grippable means (46) at each side adapted to be engaged by said hook means (47) or said similar gripping means of said chains or cables to move said carriage (13) along said tipping bridge (4) by means of said chains or cables (17).

2. Apparatus according to claim 1, characterized in that the slidable tipping bridge (4) or slidable part (8) thereof carries two cable or chain winches (42) near the end opposite said pivoting axis (5), one to each side of the central vertical plane perpendicular to said pivoting axis (5), each one for driving one of said chains or cables (17).

3. Apparatus according to claim 1 or claim 2, characterized in that the carriage (13) carries two gripping means (33) one to each side of the center and at the same height, so shaped and at such a distance from each other as to be able to grip a container (36) (a so-called sea container) by gripping its bottom corner castings (37).

4. Apparatus according to any of the preceding claims, characterized in that the carriage (13) comprises one or more hooks (20, 28) in or near its central plane to grip containers having central gripping means, in which in the case of more than one hook (20, 28) these are positioned at different levels.

5. Apparatus according to claim 4, characterized in that one or more of said hooks (20, 28) and other gripping means (33) are easily detachable from the carriage.

6. Apparatus according to claim 4 or claim 5, characterized in that one part (20) of the gripping means comprises a hook which is disposed on an upright arm (19) on the carriage (13), this arm (19) being connected to the remainder of the carriage (13) for pivoting about a horizontal transverse axis at a lower point and being supported on the carriage (13) by a strut (18, 26) acting on the upright arm (19) near the top end, which strut (18, 26) can be connected to the carriage (13) and arm (19) with at least two operative lengths, in such a manner that the upright arm (19) can be placed in at least two upright angular positions.

7. Apparatus according to claim 6, characterized in that the length of the upright arm (19) of the hook (20) can easily be varied.

8. Apparatus according to any one of the preceding claims, characterized in that the track (7, 8, 9) for the carriage (13) is provided, at the end near the point where the container is picked up, with an easily removable part (51) which, when removed, leaves free under this track a recessed space (54) in which a transverse girder part (53) of a container can be received and secured against movement in the upward direction.

**Patentansprüche**

1. Vorrichtung mit vertikal und horizontal beweglichen Greifeinrichtungen (20, 28, 33, 47) zum Greifen eines auswechselbaren Behälters (36, 49) und zum Aufbringen desselben aus einer geringeren Höhe auf eine Tragfläche eines Fahrzeuges (1, 2) oder eines anderen Trägers und zum Abnehmen von dieser, mit einem um eine nahe dem Ende der Tragfläche, auf welche ein Behälter aufzubringen und von dieser abzunehmen ist, angeordnete horizontale Achse verdrehbaren die Tragfläche tragenden Kipprahmen (4, 8), der (4) oder ein Teil (18) von diesem in Längsrichtung des Kipprahmens verschieblich ausgebildet ist und wobei der verschiebliche Teil einen auf ihm zwischen Stellungen nahe seinen beiden Enden verschiebbaren Schlitten (13) trägt, der mit Vorrichtungen (20, 28, 33) zum Greifen eines anzuhebenden Behälters versehen ist, sowie mit zwei parallelen je an den beiden Seiten einer vertikalen Längsebene der Tragfläche angeordneten und in Längsrichtung der Tragfläche verlängerbaren und beweglichen Ketten oder Seilen (17), und mit Antriebseinrichtungen (40, 41, 42) zum Betätigen der Ketten oder Seile (17) und mit einer auf der Tragfläche nahe deren Ende, auf welches ein Behälter aufzubringen oder von ihm abzunehmen ist, angeordneten Führungseinrichtung (14) zum Führen der zum Verbinden mit nahe dem unteren Ende auf beiden Seiten eines zu greifenden Behälters angebrachten Hakeneinrichtungen (48) oder ähnlichen Greifeinrichtungen an ihren freien Enden mit Haken (47) oder ähnlichen Greifeinrichtungen versehenen Ketten oder Seile (17) diesem Ende vorbei gegen einen zu greifenden Behälter zu, dadurch gekennzeichnet, daß die Antriebseinrichtungen (40, 41, 42) für die Betätigung der Ketten oder Seile (17) dazu ausgebildet sind, diese unabhängig von der Bewegung des Schlittens (13) mit ihren Hakeneinrichtungen (47) zu dem Ende des Kipprahmens (4, 8) gegenüber dem Ende der Tragfläche, auf welches ein Behälter aufgebracht oder von diesem abgenommen wird, zu bewegen, und daß der verschiebliche Kipprahmen (4) oder ein Teil davon (18) mit seinem der horizontalen Drehachse (5) benachbarten Ende zur Erde und aufwärts von dieser in aufwärts geneigter Stellung des Kipprahmens verschiebbar ist, und daß der Schlitten (13) an jeder Seite Hakeneinrichtungen oder ähnliche Greifeinrichtungen (46) zum Verbinden mit den Hakeneinrichtungen (47) oder ähnlichen Greifeinrichtungen der Ketten oder Seile (17) aufweist, um den Schlitten (13) mittels der Ketten oder Seile (17) entlang des Kipprahmens (4) zu bewegen.

2. Vorrichtung nach Anspruch 1, dadurch gekennzeichnet, daß der verschiebliche Kipprahmen (4) oder sein verschieblicher Teil (8) nahe dem der Drehachse (5) benachbarten Ende zwei Seile- oder Kettenwinden (42) aufweist, je eine zum Antreiben einer der beiden Ketten oder Seile (17) auf jeder Seite der zur Drehachse (5) senkrechten zentralen vertikalen Ebene.

3. Vorrichtung nach Anspruch 1 oder 2, dadurch gekennzeichnet, daß der Schlitten (13) zwei Greifeinrichtungen (33) aufweist, von denen je eine auf jeder Seite von der Mitte aus und in gleicher Höhe in einem solchen Abstand von der anderen angeordnet und so ausgebildet ist, daß sie einen Behälter (36) (einen sogenannten See-Behälter) durch Erfassen seiner Gehäusebodenecken greifen.

4. Vorrichtung nach irgendeinem der vorhergehenden Ansprüche, dadurch gekennzeichnet, daß der Schlitten (13) in oder nahe seiner Mittelebene einen oder mehrere Haken (20, 28) zum Greifen von Behältern mit mittigen Greifeinrichtungen aufweist, wobei im Falle von mehr als einem Haken (20, 28) diese in unterschiedlicher Höhe angeordnet sind.

5. Vorrichtung nach Anspruch 4, dadurch gekennzeichnet, daß einer oder mehrere der Haken (20, 28) und anderen Greifeinrichtungen (33) vom Schlitten leicht abnehmbar sind.

6. Vorrichtung nach Anspruch 4 oder 5, dadurch gekennzeichnet, daß ein Teil (20) der Greifeinrichtung einen Haken aufweist, der an einem aufrechten Arm (19) auf dem Schlitten angeordnet ist, wobei dieser Arm (19) mit dem Rest des Schlittens (13) zum Verdrehen um eine horizontale Querachse in einem tiefen Punkt verbunden und auf dem Schlitten (13) durch eine auf den aufrechten Arm (19) nahe dem oberen Ende einwirkende Strebe (18, 26) gestützt ist, wobei diese Verstrebung (18, 26) mit dem Schlitten (13) und Arm (19) mittels wenigstens zweier wirksamer Längen verbindbar ist, so daß der aufrechte Arm (19) in wenigstens zwei aufrechte winklige Stellungen verstellbar ist.

7. Vorrichtung nach Anspruch 6, dadurch gekennzeichnet, daß die Länge des aufrechten Arms (19) des Hakens (20) leicht veränderbar ist.

8. Vorrichtung nach irgendeinem der vorhergehenden Ansprüche, dadurch gekennzeichnet, daß die Schienen (7, 8, 9) für den Schlitten (13) am Ende nahe dem Punkt, wo der Behälter aufgenommen wird, mit einem leicht abnehmbaren Teil (51) versehen sind, der beim Entfernen einen ausgesparten Spalt (54) freigibt, in welchem ein Querträgerteil (53) eines Behälters gegen die Bewegung in Aufwärtsrichtung gesichert aufnehmbar ist.

## Revendications

1. Dispositif comportant des moyens de préhension (20, 28, 33, 47) verticalement et horizontalement mobiles pour prendre un conteneur interchangeable (36, 49) et pour l'amener d'un niveau inférieur à une surface de support prévue sur un véhicule (1, 2) ou sur un autre support, et pour l'en retirer, comprenant un pont basculant (4, 8) pouvant pivoter autour d'un axe horizontal (5) situé près de l'extrémité de cette surface de support lorsqu'un conteneur doit être chargé sur cette surface et en être déchargé, ce pont basculant supportant la surface de support, ce pont 4 ou une partie (18) de ce dernier pouvant coulisser dans le sens longitudinal du pont, cette partie coulissante supportant un chariot (13) mobile le long de la partie pouvant coulisser entre des positions voisines de ses deux extrémités, ce chariot (13) supportant des moyens (20, 28, 33) prévus pour prendre un conteneur à lever, cet appareil comportant deux chaînes ou câbles parallèles, placés de chaque côté d'un plan vertical longitudinal de cette surface de support, ces chaînes ou câbles (17) pouvant se prolonger et se déplacer dans le sens longitudinal de la surface de support, des moyens d'entraînement (40, 41, 42) pour déplacer ces chaînes ou câbles (17), des moyens de guidage (14) sur cette surface de support près de l'extrémité où un conteneur doit être chargé sur cette surface et en être déchargé, afin de guider les chaînes ou câbles (17) au-delà de cette extrémité vers un conteneur à prendre, les chaînes ou les câbles étant pourvus de moyens d'accrochage (47) ou de moyens analogues de préhension à leurs extrémités libres pour saisir des moyens (48) formant crochets ou de moyens analogues de préhension placés près de l'extrémité inférieure de chaque côté d'un conteneur à prendre, caractérisé en ce que les moyens d'entraînement (40, 41, 42) pour déplacer ces chaînes ou câbles (17) sont prévus pour les déplacer avec leurs moyens d'accrochage (47) jusqu'à l'extrémité du pont basculant (4, 8) qui est opposée à l'extrémité où un conteneur doit être chargé sur cette surface de support et en être déchargé, indépendamment du déplacement du chariot (13), en ce que le pont basculant coulissant (4) ou une partie (8) de ce dernier peut coulisser, sont extrémité au voisinage de l'axe horizontal (5) de pivotement pouvant s'abaisser vers le sol et s'en écarter vers le haut dans la position de basculement vers le haut du pont basculant, et en ce que le chariot (13) comporte de chaque côté des moyens d'accrochage ou des moyens analogues (46) de préhension prévus pour être accrochés par les moyens (47) d'accrochage ou les moyens analogues de préhension des chaînes ou câbles afin de déplacer le chariot (13) le long du pont basculant (4) au moyen de ces chaînes ou câbles (17).

2. Dispositif suivant la revendication 1, caractérisé en ce que le pont basculant coulissant (4) ou une partie coulissante (8) de ce dernier supporte deux treuils (42) à câble ou à chaîne près de l'extrémité opposée à l'axe de pivotement (5), placés de chaque côté du plan vertical central perpendiculaire à l'axe de pivotement (5), pour entraîner chacun l'un(e) des chaînes ou câbles (17).

3. Dispositif suivant la revendication 1 ou 2, caractérisé en ce que le chariot (13) supporte deux moyens (33) de préhension placés de chaque côté du centre et à la même hauteur, ayant une forme telle et écartés l'un de l'autre d'une distance telle qu'ils peuvent prendre un conteneur (36) (conteneur dit marin) en saisissant ses pièces d'angle (37) à la partie inférieure.

4. Dispositif suivant l'une quelconque des revendications précédentes, caractérisé en ce que le chariot (13) comprend un ou plusieurs crochets (20, 28) placés dans ou près de son plan central pour prendre des conteneurs équipés de moyens de préhension centraux, dans lequel ces crochets, lorsqu'ils sont plusieurs (20, 28), sont placés à des niveaux différents.

5. Dispositif suivant la revendication 4, caractérisé en ce qu'un ou plusieurs de ces crochets (20, 28) et d'autres moyens (33) de préhension peuvent être facilement séparés du chariot.

6. Dispositif suivant la revendication 4 ou 5, caractérisé en ce qu'une partie (20) des moyens de préhension comprend un crochet qui est monté sur un bras vertical (19) équipant le chariot (13), ce bras (19) étant relié au reste du chariot (13) de manière à pouvoir pivoter autour d'un axe transversal horizontal en un point situé plus bas et étant supporté sur le chariot (13) par une jambe de force (18, 26) agissant sur le bras vertical (19) près de l'extrémité supérieure, cette jambe de force (18, 26) pouvant être reliée au chariot (13) et au bras (19) par au moins deux longueurs de fonctionnement, de sorte que le bras vertical (19) peut être placé dans au moins deux positions angulaires verticales.

7. Dispositif suivant la revendication 6, caractérisé en ce que la longueur du bras vertical (19) du crochet (20) peut facilement être modifiée.

8. Dispositif suivant l'une quelconque des revendications précédentes, caractérisé en ce que le chemin de roulement (7, 8, 9) du chariot (13) est équipé, à l'extrémité voisine du point où le conteneur est saisi, d'une pièce facilement amovible (51) qui, lorsqu'elle est enlevée, laisse libre sous ce chemin de roulement un espace évidé (54) dans lequel une partie d'une poutre transversale (53) d'un conteneur peut être introduite pour empêcher tout mouvement vers le haut.

Fig-1

0 151 635

Fig-2

0 151 635

Fig-3

Fig-4

Fig-5

3

Fig-6

Fig-7